# EUROPEAN PATENT APPLICATION

(11) **EP 0 808 580 A2**
(43) Date of publication of application: **26.11.1997**
(21) Application number: 97108042.9
(22) Date of filing: 16.05.1997
(51) Int. Cl.: A23P 1/08, A21D 13/00, A23G 3/00

(54) **No and low fat food coatings with crosslinkable hydrocolloids**

(30) Priority: 22.05.1996 US 651078
(71) Applicant: HERCULES INCORPORATED, Wilmington, Delaware 19894-0001 (US)
(72) Inventor: Forman, Susan C., Nontum Mills, Newark, Delaware 19711 (US); Gerrish, Timothy C., Kennett Square, Pennsylvania 19348 (US); Mercado, Sandra J., Dummond North, Newark, Delware 19711 (US)
(74) Representative: Hansen, Bernd, Dr. Dipl.-Chem.

(57) **Abstract**

A low or no fat food coating or enrobing composition is composed of water, soluble solids, at least one crosslinkable hydrocolloid, and a sufficient amount of a crosslinking agent to crosslink the hydrocolloid. This enrobing composition is used to enrobe a foodstuff such as snack cakes, cookies, donuts, fruits, and confectioneries.

## Description

### BACKGROUND OF THE INVENTION

Today's society is becoming more health and weight conscious with a large portion of the population having a growing desire to feel and look better. One of the major ways for people to become healthier is for them to get their weight under control. Reducing the amount of calories that is consumed in a day will enable a person to lose weight and thus help that person to become a more healthier and vibrant individual. A large portion of the calories that a person consumes is associated with the amount of fat that is consumed. Hence, by a person reducing the amount of fat that is consumed in a day, he will inevitably reduce the amount of calories that are consumed, and thus lose weight and become healthier when combined with a physical fitness program. Not only will a person feel better about himself but he will improve his health by improving his cardiovascular functions. Consequently, a whole new market for no and low-fat products has emerged.

No and low fat foods are synonymous with low calorie foods that have been widely advocated as a diet regimen to control excess body weight. One such food is no or low fat snack foods such as enrobed bakery or confectionery foods.

The industry of manufacturing confectionery and snack food coatings is primarily focused on true dark or milk chocolates as well as imitation or compound coatings. Other types of coatings which may be prepared are those consisting of yogurt solids, carob and soy protein isolate. While they are all vastly different within the industry standards, there is a common component to all of them, fat.

A standard full fat chocolate enrobing coating contains of up to 50% fat which is either derived from cocoa fat, chocolate liquor, or a blend of hard fats to produce a compound coating. With the addition of emulsifiers, sweeteners, milk powders and other minor ingredients, the chocolate product is tempered and processed in such a way as to form proper fat crystals which is common practice to those skilled in the art. After as much as 24 hours of tempering, the enrobing coating is pumped to an enrobement vessel which is held at no greater than 120°F. The coating may be enrobed over a desired center. Examples of such centers to be enrobed by a full fat coating are cookies, snack cakes, candy bars, confectionery products, dairy products, nuts, granola products and other cereal based products.

According to the prior art of full fat enrobing processes, a center is typically bottom coated by transporting the center through a puddle of enrobement. The bottom-coated center is then transferred to a cooling belt or cold table to quick set the coating. The center is then transferred to a wire net and is passed under a cascade of the coating. Excess coating is recirculated back to the enrobement tank. The desired coating weight is typically between 15 and 30%, more typically between 20 and 25%. Next, air knives and/or a de-tailing rod removes excess coating and the coated center is transferred to a conveyor belt which travel through a cooling tunnel. Depending on the plant resources, the residence time in the tunnel varies, as do the temperatures. Typically, residence time is between 10 and 30 minutes and tunnel temperatures are ramped between 45 and 65° F. Temperatures are decreased gradually to prevent the coating from setting too rapidly, thus causing the fat crystals to be unstable. Once fully cooled, the cooling temperatures must be increased gradually to prevent moisture from depositing on the surface of the coating. The coated center, once cooled, is now ready for packaging.

In the prior art of full fat enrobing coatings, the types of fat found are high in lauric and stearic acids. These types of fats are able to set rapidly forming a firm coating which may be applied to almost any imaginable food type. It is the fat that functions to provide the desired firmness. When the fat is removed, the ability to achieve firmness is lost. Furthermore, water and soluble solids may then be used to replace the weight of the fat in the formulation. This provides a vantage point for hydrocolloids in this system, as water is necessary for hydrocolloid dissolution.

Problems of the full fat enrobed foods are that they are temperature sensitive such that if they reach extremely high or low temperatures, their shelf life is reduced. Over a period of time, full fat chocolate coating deteriorates, such that chocolate softens, chocolate bloom is apparent, and coated centers stick together. Under perfect environmental conditions, a coated center may be expected to last up to six months, after which time, off flavors and chocolate bloom often develop. Common processing problems are the occurrence of pinholes due to air inclusion; distortion and/or splitting of coatings due to contraction of the fat; discoloration due to air drafts in the enrobing room; and overthickening or loss of seed due to improper temperature control.

US Patent 5,356,644 discloses a low calorie fat substitute that is an outer coating of a digestible fat surrounding an inner core of a low caloric or non-caloric material such as a hydrocolloid. US Patent 4,563,363 discloses a chocolate coated baked biscuit that uses a low sugar jelly undercoating that may be an agar, a pectin, or a carrageenan based jelly.

In the bakery and snack food industries, a need still exists for providing a no or low fat enrobing coating that has organoleptic and rheological properties similar to the full fat counterpart coated foods and yet has equal or superior shelf life and processability to that of full fat coated foods. Superior shelf life is defined as presenting fewer or no problems with chocolate bloom, coating discoloration or distortion over a period of time.

### SUMMARY OF THE INVENTION

The present invention is directed to a low or no fat food coating or enrobing composition comprising water, soluble solids, at least one crosslinkable hydrocolloid selected from the group consisting of pectin, carrageenan, alginate, agar and gellan, and a sufficient amount of a crosslinking agent to crosslink the hydrocolloid.

The present invention also comprehends that in a coating or enrobing composition comprising about 50% by weight of fat, sugar/sweeteners, and an emulsifier, the improvement comprising replacing at least 70% by weight of the total fat in the composition with water, soluble solids and a crosslinkable hydrocolloid selected from the group consisting of pectin, carrageenan, alginate, agar and gellan, and a sufficient amount of a crosslinking agent to crosslink the hydrocolloid for producing a low or no fat coating or enrobing composition.

The present invention further relates to a process for coating or enrobing a foodstuff comprising of heating for a sufficient time to dissolve ingredients of a coating or enrobing composition comprised of water, soluble solids, and at least one crosslinkable hydrocolloid selected from the group consisting of pectin, carrageenan, alginate, agar and gellan, coating a foodstuff with the enrobing composition, and then contacting the coated foodstuff with a sufficient amount of a crosslinking agent to crosslink the crosslinkable hydrocolloid to produce an enrobed foodstuff having organoleptic properties comparable to full fat enrobed foodstuffs.

### DETAILED DESCRIPTION OF THE INVENTION

In accordance with the present invention, it has surprisingly been found that fat can be reduced or eliminated all together in enrobing coatings for bakery, snack and confectionery foods by crosslinking a crosslinkable hydrocolloid with either a mono or polyvalent cation or thermal processing in the enrobing coating composition to bind water in the composition and to provide a firm gel structure. Such no or low fat enrobing coating compositions have reduced fat content while providing rheological and organoleptic properties similar to those of full fat enrobing coating compositions.

In accordance with this invention, "no fat" means that the coating material will contain less that 0.5 grams of fat per serving size on a coated product and no ingredient will be added which is a fat. The term "low fat" means that the coating will contain 3 grams or less of fat per serving size on a coated product These definitions conform to the published regulations under the Nutrition Labelling and Education Act of the Food and Drug Administration.

### a) Water

In accordance with the present invention, total water is present in an amount having an upper limit of about 75% by weight, preferably about 55%, more preferably about 35%. The lower limit of water is about 15%, preferably about 20%, more preferably about 25%. It should be understood that water content may be varied in the composition depending on the desired consistency and viscosity of the enrobing composition. Water is the component that dissolves the other ingredients and provides the medium for producing the matrix for the gel which is composed primarily of water.

### b) Soluble Solids

Soluble solids are important in the present invention. This is the component that provides the body and taste to the coating. Carbohydrates, such as, but not limited to, high fructose corn syrup, corn syrup, hydrogenated corn syrup, maltodextrin, dextrose, sucrose (sugar) or sucrose syrup, are used, individually or in combination, as high as 90%, preferably about 80%, more preferably about 70%. These types of carbohydrate sources may also be used as low as 20%, preferably about 30%, more preferably about 40%. For the present invention, if an ionically crosslinkable hydrocolloid is used, such as pectin, which requires a mono and/or polyvalent ion for ionic crosslinking, caution must be taken either to select a carbohydrate source which is low in mono and/or polyvalent ions, or to further incorporate a chelating agent into the carbohydrate source in order to prevent premature crosslinking. Cocoa powder is another source of soluble solids that is primarily used in chocolate-type enrobing compositions. Cocoa may be used as high as 10% or as low as 2%. The most preferred use level is about 5%. As previously mentioned with carbohydrate sources, care must be taken when using cocoa powder to prevent premature crosslinking when ionically reactive hydrocolloids are used. Other sources of soluble solids to be used in place of or in addition to cocoa, but not limited to these, are peanut flour, caramel powder, yogurt powder, fiber compositions (such as wheat gluten, wheat starch, rice starch, corn starch, corn flour).

### c) Crosslinkable Hydrocolloids

In accordance with this invention, the crosslinkable hydrocolloids that can be used in this composition are water soluble and crosslinkable with either a mono and/or polyvalent cation or through thermal processing. Preferred hydrocolloids are polysaccharides. Examples of such polysaccharides are pectin, carrageenan, alginate, agar and gellan. The amount of ionically crosslinkable hydrocolloid used in this invention should be sufficient to react with the cation for producing a firm gel. Generally, the hydrocolloid should have an upper limit in the composition in the amount of 5.0%, preferably 3.5%, more preferably 2%; the lower limit of the hydrocolloid in the composition is 0.01%, preferably 0.05%, more preferably 0.10%.

### i) Pectin

A calcium reactive low methoxy (LM) pectin is the preferred hydrocolloid that is used in the practice of the instant invention. The LM pectin is selected from the group of pectins known as conventional low methoxy pectins (LMC) or amidated low methoxy pectins (LMA). It should have a degree of esterification (DE) of less than 50%, preferably less than 25% and most preferably less than 2%. A DE of zero is the ultimate for the instant invention, as lower DE is directly related to increased cation reactivity. The ability of the pectin to react with cations under the conditions of this invention is dependent upon meeting the above criteria. The crosslinking agent is any mono- or poly-valent cation that will induce the crosslinking reaction. Examples of such cations are calcium, iron, magnesium, zinc, aluminum, manganese, sodium, potassium, ammonium and mixtures thereof. When tested, pectins which fell outside of the above ranges did not sufficiently crosslink with the crosslinking agent in order to form a firm gel. The average molecular weight of this pectin without sucrose standardization should be greater than 50,000 daltons, preferably greater than 65,000 daltons, and more preferably greater than 80,000 daltons.

When prepared with pectin, the most preferred hydrocolloid, the instant invention has a smooth and fat-like consistency and mouth feel associated with food products composed of oil-in-water or water-in-oil emulsions. This pectin composition is very stable so that enrobed food products made with it will not show changes in appearance or texture after heating to 100°F.

### ii) Carrageenan

The ability of carrageenan to perform in the present invention is dependent upon its weight percent of sulphate groups in the molecule and its high molecular weight The less sulphate groups, the stronger the gelling power. A gelling carrageenan, such as kappa or iota is preferred in the present invention, preferably kappa carrageenan. Further, ionic crosslinking is affected by the salts which interact with the carrageenan. In kappa carrageenans, the preferred salt may be one of potassium, calcium or sodium, with potassium being most preferred.

When prepared with carrageenan, the resulting enrobing coating has a brittle gel which has a cohesive matrix. The instant invention has a smooth fat-like mouthfeel and is shelf stable for at least two months.

### iii)Alginate

The ability of alginate to perform in the present invention is dependent upon the ratio and sequence of D-mannuronic acid (M-block) and L-guluronic acid (G-block) components of the alginate molecule. Alginates high in M-block regions will produce a medium gel strength matrix, while alginates high in G-block regions will produce a high gel strength matrix. Ionic crosslinking is also affected by the salt which crosslinks with the alginate. The salt form may be one of sodium, potassium, calcium or ammonium, with calcium being most preferred.

### iv) Gellan

The ability of gellan to perform in the present invention is dependent upon its degree of acylation. The lower the degree of acylation, the firmer the gel strength. Gellan also requires the presence of cations as a crosslinking agent in order to form a gelled matrix. The type and concentration of the cation is varied in order to achieve varying degrees of gel strength. Gellan is most reactive with divalent cations such as calcium or magnesium, but is also reactive with monovalent cations such as sodium or potassium.

### v) Agar

The ability of agar to perform in the present invention is primarily dependent upon its ability to form a firm gel by polymer chain association induced by thermal processing. As the degree of methylation increases, a property of agar in the invention is its ability to form a thermally reversible gel matrix at low temperature.

### d) Ionic Crosslinking Agents

In the case of ionically crosslinkable hydrocolloids, a cation source is required to form a rigid or semi-rigid gel matrix. Cations can be derived in part from ingredients within the coating composition. In the case of a chocolate type coating, commercial cocoas have been semi-quantitatively measured for ion content. Examples of these are listed below as parts per million (ppm) unless otherwise specified:

| Cocoa Source | Na | Mg | Al | P | K | Ca | Mn | Fe | Cu | Zn |
|---|---|---|---|---|---|---|---|---|---|---|
| Hershey's Natural Unsweetened Cocoa | - | 0.61 % | 180 | 0.73 % | 1.70 % | 0.18 % | 53 | 110 | 32 | 8 |
| Droste Dutched Cocoa w/ Alkali | 380 | 0.52 % | 150 | 0.47 % | 2.9% | 0.13 % | 48 | 240 | 35 | 62 |
| DeZaan Defatted Dutched Cocoa | 360 | 0.59 % | 180 | 0.61 | 4.0% | 0.14 % | 46 | 370 | 43 | 75 |

Sweetener sources have also been analyzed and some typical compositions have the following ion content:

| Sweetener Source | Na | Mg | P | Ca | Fe | Zn |
|---|---|---|---|---|---|---|
| High Fructose Corn Syrup (Fructose 55) | <1ug/g | NP | NP | 0.9 | NP | NP |
| 62/43 Corn Syrup | 900 | 5 | 68 | 47 | 3 | 11 |
| *NP=Not Present | | | | | | |

Because some ingredient sources are high in ion content, use of these ingredients should be minimized or a chelating agent must be added to prevent premature crosslinking of the enrobing coating system when a cationically crosslinkable hydrocolloid is used. In general, though, the quantities of cations in these ingredients are not sufficient to form a desirable rigid or semi-rigid gelled coating. An additional cation source is incorporated into the procedure to form the desired gelled coating.

The crosslinking agent of the present invention includes cations which are appropriate for forming salts with ionically crosslinkable hydrocolloids. Of the hydrocolloids being claimed in the present invention, pectin, carrageenan, alginate and gellan all require a cation source for crosslinking to be induced. Examples of such cation sources include calcium, magnesium, sodium, potassium, ammonium, aluminum, ferrous, ferric, cuprous and cupric ions. Among the most preferred ion sources are calcium chloride anhydrous, calcium chloride dihydrate, and calcium phosphate monobasic. The most preferred system is calcium chloride dihydrate. The quantity of polyvalent cation applied to the coating is dependent on the type of cation used as well as the total ion content of the coating system. The quantity should be sufficient to form a rigid or semi-rigid gelled matrix. In the preferred system, using the preferred crosslinking cation, the amount of elemental calcium used to effectively crosslink the hydrocolloid and form a gelled matrix is 0.22%, as determined by semi-quantitative analysis. Generally, the upper limit of the amount of crosslinking agent used in the present invention is 1%, preferably 0.6%, and more preferably 0.4%. The lower limit of the crosslinking agent is generally 0.1%, preferably 0.15%, and more preferably 0.2%.

### Thermal Crosslinking Agent

In the case of thermally crosslinkable hydrocolloids, cooling a solution of the hydrocolloids induces the crosslinking mechanism, via hydrogen bonding and polymer chain association. Of the hydrocolloids claimed in the present invention, agar is the only one which is thermally crosslinked. In this instance, hydrogen bonding and polymer chain association are initiated at temperatures below 150°F.

### Processing

In accordance with the present invention, the process for preparing the enrobing coating is performed by first dissolving in water the hydrocolloid, preferably a LM pectin with a DE of less than 10% and an average molecular weight of between 80,000 to 150,000 daltons. For the following procedures, alginate or gellan may also be used. A second solution containing sweeteners (preferably a sugar syrup), soluble solids such as cocoa, and other enrobing ingredients are prepared by heating and dissolving all solids. The hydrocolloid solution is then added to the sugar solution, which then constitutes the enrobing coating. The center to be enrobed is then, preferably, coated with the enrobement and then treated with a solution of the cationic gelling agent. The step of treating with a cationic crosslinking agent can be performed, for example, by dipping in a solution bath, overspraying, using a fluidized bed, brushing on, etc. If carrageenan is used, the cationic gelling agent should be present by nature of the carrageenan extraction method. In this case, the step of treating with a cationic crosslinking agent is removed. If agar is used, no cationic gelling agent is required. In this case also, the step of cation treatment is removed.

One embodiment of how the present invention would be incorporated into a plant setting is described below. Where standard enrobing equipment is used, centers are bottom-coated as normal. With the preferred invention, a cooling belt or cold table is not necessary. Rather, a dip station containing the crosslinking agent is set up on the underside of the belt such that the belt will carry the cationic crosslinking agent on its surface into contact with the coated bottom. This will allow the bottom of the center to crosslink without permitting the aqueous cation solution to contact and be absorbed by any uncoated surface of the center. The bottom-coated center then is transported through the enrobing curtain and is transferred to a wire mesh conveyor.

An overspray of cationic crosslinking agent is applied at this time. The crosslinking starts when the center treated with the enrobing composition is contacted with the cationic crosslinking agent. The cationic solution ionically crosslinks with the hydrocolloid producing a semi-firm gel. If necessary, a battery of overspray units can be used. The crosslinked coated centers travel through a tunnel or over a standard belt with blown ambient air for a period of 15 minutes.

During this cooling period, the crosslinking continues to occur, over which time the cation migrates throughout the no or low fat coating and produces a firm gel. For this invention, cooled air is not necessary and has no bearing on the setting of the coating. Rather, velocity of air to whisk off moisture, and time to allow for cation migration through the coating are critical. At the end of this tunnel or conveyor, a small conveyor is necessary to allow for bottom drying of the product. This is accomplished by using a perforated belt with air forced through from the bottom. Again, the function of this step is to whisk excess moisture from the surface of the coating. After the centers are enrobed, the coated food is then dried and cooled for a period of time before packaging for shipping or storing.

Having described the invention in general terms, reference is now made to specific examples. It is to be understood that these examples are not meant to limit the invention, but merely to illustrate the invention specifically. All parts and percentages are based on the total weight of the composition unless otherwise specified.

### EXAMPLE 1

### Chocolate-type Enrobing Coating Prepared with LMC pectin

The formulation for the present invention is described below:

| Enrobing Ingredients | wt, % |
|---|---|
| Water | 17.90 |
| SLENDID® 500 (LMC pectin, marketed by Hercules Inc.) | 1.00 |
| Genu®Lacta KM-5 (Kappa Carrageenan, marketed byHercules Inc.) | 0.10 |
| Hershey's® Natural Unsweetened Cocoa | 10.00 |
| CornSweet® 55 (High Fructose Corn Syrup,marketed by ADM) | 70.00 |
| Glycerin | 1.00 |

| Crosslinking Agent Ingredients | wt,% |
|---|---|
| Water | 95.00 |
| Calcium Chloride Dihydrate | 5.00 |

The enrobing coating formulation above was prepared by heating the water to 160°F in a water bath with an overhead mixer in place. The pectin and carrageenan were added to the water and were sufficiently agitated to ensure that complete dissolution was obtained. The corn syrup, cocoa and glycerin were subsequently heated in a separate water bath to a temperature of 160°F, also using an overhead mixer. Once the full temperature was reached, the hydrocolloid solution was added to the corn syrup solution with agitation for 10 minutes until a homogenous system was obtained. This mixture forms the enrobing coating. The temperature of the coating was held at 160°F until the time of enrobement. The crosslinking agent was prepared by dissolving the calcium chloride in the water at room temperature.

The enrobing process was carried out by submerging the desired base or center into the hot enrobing coating in order to provide full coverage of the base. The bases used in this invention were fat free devil's food cookies, snack cakes, granola bars, strawberries, marshmallows, brownies and fig bars. The enrobed base was then submerged into the 5% calcium chloride solution and held for a minimum of 10 seconds. The coated and crosslinked base was then set on a cooling tray at ambient temperature for 15 minutes. After 15 minutes, the coated base was then turned bottom-up for an additional 5 minutes to allow the bottom coat to fully dry. Samples were then packaged and stored for evaluation under ambient conditions and at 90°F and 70% relative humidity. Samples were evaluated periodically. It was determined that enrobed products were free of mold, off flavors and undesireable color development. No syneresis was observed and stored samples did not adhere together.
The final fat content was reduced from approximately 50% which would be found in a full fat version to 1%.

### EXAMPLE 2

### Chocolate-type Enrobing Coating Prepared with Kappa Carrageennan

The formulation which was used in this patent example is described below:

| Enrobing Ingredients | wt, % |
|---|---|
| Water | 30.00 |
| Genu®Gel WR-78 (Kappa carrageenan, marketed by Hercules Inc.) | 1.00 |
| CornSweet 55 | 70.00 |
| Hershey's® Natural Unsweetened Cocoa | 10.00 |
| Glycerin | 1.00 |

The enrobing coating formulation above was prepared by heating the water to 160°F in a water bath with an overhead mixer in place. The carrageenan was added to the water and was sufficiently agitated to ensure that complete dissolution was obtained. The corn syrup, cocoa and glycerin were subsequently heated in a separate water bath to a temperature of 160°F, also using an overhead mixer. Once the full temperature was reached, the hydrocolloid solution was added to the corn syrup solution with agitation until a soluble solids content of 70% was achieved. This mixture forms the enrobing coating. The coating was held at 160°F until the time of enrobement.

The enrobing process was carried out by submerging the desired base or center into the hot enrobing coating in order to provide full coverage of the base. The bases used in this invention were fat free devil's food cookies, snack cakes, granola bars, strawberries, marshmallows, brownies and fig bars. The coated and crosslinked base was set on a cooling tray at ambient temperature for 10 minutes after which a firm gel was achieved. Samples were packaged and stored for evaluation, under both ambient conditions and at 90°F/70% relative humidity. The enrobed products were free of mold, off flavors, and undesireable color development. Stored samples did not adhere together or to the packaging.

### EXAMPLE 3

### Chocolate-type Enrobing Coating Prepared with Agar

The formulation which was used in this patent example is described below:

| Enrobing Ingredients | wt, % |
|---|---|
| Water | 17.20 |
| Algas Marinas' Agar Type 10 | 0.75 |
| CornSweet® 55 | 70.00 |
| Hershey's® Natural Unsweetened Cocoa | 10.00 |
| Glycerin | 2.00 |

The enrobing coating formulation above was prepared by heating the water to 160°F in a water bath with an overhead mixer in place. The agar was added to the water and was sufficiently agitated to ensure that complete dissolution was obtained. The corn syrup, cocoa and glycerin were subsequently heated in a separate water bath to a temperature of 160°F, also using an overhead mixer. Once the full temperature was reached, the hydrocolloid solution was added to the corn syrup solution with agitation until a soluble solids content of 70% was achieved. This mixture forms the enrobing coating. The coating was held at 160°F until the time of enrobement.

The enrobing process was carried out by submerging the desired base or center into the hot enrobing coating in order to provide full coverage of the base. The bases used in this invention were fat free devil's food cookies, snack cakes, granola bars, strawberries, marshmallows, brownies and fig bars. The coated and crosslinked base was set on a cooling tray at 45°F for 20 minutes. After 20 minutes, the coated base was then turned bottom-up for an additional 10 minutes to allow the bottom coat to fully dry. Samples were packaged and stored for evaluation.

### EXAMPLE 4

### Chocolate-type Enrobing Coating Prepared with Gellan

The formulation which was used in this patent example is described below:

| Enrobing Ingredients | wt, % |
|---|---|
| Water | 18.00 |
| KelcoGel® (gellan gum marketed by Kelco) | 1.00 |
| CornSweet® 55 | 69.00 |
| Hershey's® Natural Unsweetened Cocoa | 10.00 |
| Glycerin | 2.00 |

| Crosslinking Agent Ingredients | wt,% |
|---|---|
| Water | 95.00 |
| Calcium Chloride Dihydrate | 5.00 |

The enrobing coating formulation above was prepared by heating the water to 160°F in a water bath with an overhead mixer in place. The gellan was added to the water and was sufficiently agitated to ensure that complete dissolution was obtained. The corn syrup, cocoa and glycerin were subsequently heated in a separate water bath to a temperature of 160°F, also using an overhead mixer. Once the full temperature was reached, the hydrocolloid solution was added to the corn syrup solution with agitation until a soluble solids content of 70% was achieved. This mixture forms the enrobing coating. The coating was held at 160°F until the time of enrobement.

The enrobing process was carried out by submerging the desired base or center into the hot enrobing coating in order to provide full coverage of the base. The bases used in this invention were fat free devil's food cookies and marshmallows. The enrobed base was then submerged into the 5% calcium chloride solution and held for a minimum of 10 seconds. The coated and crosslinked base was then set on a cooling tray at ambient temperature for 15 minutes. After 15 minutes, the coated base was then turned bottom-up for an additional 5 minutes to allow the bottom coat to fully dry. Samples were then packaged and stored for evaluation.

### EXAMPLE 5

### Chocolate-type Enrobing Coating Prepared with Alginate

| Enrobing Ingredients | wt, % |
|---|---|
| Water | 19.00 |
| Kelcoloid® HVF (Propylene glycol alginate, marketed by Kelco) | 1.00 |
| CornSweet® 55 | 70.00 |
| Hershey's® Natural Unsweetened Cocoa | 10.00 |

| Crosslinking Agent Ingredients | wt,% |
|---|---|
| Water | 95.00 |
| Calcium Chloride Dihydrate | 5.00 |

The enrobing coating formulation above was prepared by heating the water to 160°F in a water bath with an overhead mixer in place. The alginate was added to the water and was sufficiently agitated to ensure that complete dissolution was obtained. The corn syrup and cocoa were subsequently heated in a separate water bath to a temperature of 160°F, also using an overhead mixer. Once the full temperature was reached, the hydrocolloid solution was added to the corn syrup solution with agitation until a soluble solids content of 70% was achieved. This mixture forms the enrobing coating. The coating was held at 160°F until the time of enrobement.

The enrobing process was carried out by submerging the desired base or center into the hot enrobing coating in order to provide full coverage of the base. The bases used in this invention were fat free devil's food cookies and marshmallows. The enrobed base was then submerged into the 5% calcium chloride solution and held for a minimum of 10 seconds. The coated and crosslinked base was then set on a cooling tray at ambient temperature for 15 minutes. After 15 minutes, the coated base was then turned bottom-up for an additional 5 minutes to allow the bottom coat to fully dry. Samples were then packaged and stored for evaluation.

### EXAMPLE 6

### Peanut Butter-type Coating Prepared with LMC Pectin

| Enrobing Ingredients | wt, % |
|---|---|
| Water | 13.00 |
| Hystar® (Hydrogenated corn syrup, marketed by Lonza) | 4.75 |
| SLENDID® 500 | 1.00 |
| Genu®Lacta KM-5 | 0.10 |
| CornSweet® Corn Syrup | 66.65 |
| Golden Peanut Co.'s Defatted Peanut Flour | 10.00 |
| Wheat Gluten | 2.00 |
| Glycerin | 2.00 |
| Peanut Flavor | 0.50 |

| Crosslinking Agent Ingredients | wt,% |
|---|---|
| Water | 95.00 |
| Calcium Chloride Dihydrate | 5.00 |

The enrobing coating formulation above was prepared by heating the water to 160°F in a water bath with an overhead mixer in place. The pectin and carrageenan were added to the water and were sufficiently agitated to ensure that complete dissolution was obtained. The corn syrup, peanut flour, wheat gluten, peanut flavor, and glycerin were subsequently heated in a separate water bath to a temperature of 160°F, also using an overhead mixer. Once the full temperature was reached, the hydrocolloid solution was added to the corn syrup solution with agitation for 10 minutes until a homogenous system was obtained. This mixture forms the enrobing coating. The temperature of the coating was held at 140°F until the time of enrobement. The crosslinking agent was prepared by dissolving the calcium chloride in the water at room temperature.

The enrobing process was carried out by submerging the desired base or center into the hot enrobing coating in order to provide full coverage of the base. The bases used in this invention were fat free devil's food cookies, snack cakes, granola bars, marshmallows and brownies. The enrobed base was then submerged into the 5% calcium chloride solution and held for a minimum of 10 seconds. The coated and crosslinked base was then set on a cooling tray at ambient temperature for 15 minutes. After 15 minutes, the coated base was then turned bottom-up for an additional 5 minutes to allow the bottom coat to fully dry.

## Claims

1. A low or no fat food coating or enrobing composition comprising water, soluble solids, at least one crosslinkable hydrocolloid selected from the group consisting of pectin, carrageenan, alginate, agar and gellan, and a sufficient amount of a crosslinking agent to crosslink the hydrocolloid.

2. In a coating or enrobing composition comprising 50% by weight of fat, confectionery, and an emulsifier, the improvement comprising replacing at least 90% by weight of the total fat in the composition with water, soluble solids, crosslinkable hydrocolloid selected from the group consisting of pectin, carrageenan, alginate, agar and gellan, and a sufficient amount of a crosslinking agent to crosslink the hydrocolloid for producing a low or no fat coating or enrobing composition.

3. The composition of claims 1 or 2 wherein the soluble solids are selected from the group consisting of carbohydrates, cocoa powder, peanut flour, caramel powder, yogurt powder, fiber compositions or materials, and mixtures thereof.

4. The composition of claim 3 wherein the carbohydrates are selected from the group consisting of high fructose corn syrup, corn syrup, hydrogenated corn syrup, maltodextrin, dextrose, sucrose (sugar), sucrose syrup, and mixtures thereof.

5. The composition of any of claims 1 to 4 wherein the soluble solids comprise cocoa and sugar.

6. The composition of any of claims 1 to 5 wherein the crosslinkable hydrocolloid is a low methoxyl pectin with a degree of esterification of less than 50%.

7. The composition of any of claims 1 to 5 wherein the crosslinkable hydrocolloid is a low methoxyl pectin with a degree of esterification of less than 25%.

8. The composition of any of claims 1 to 5 wherein the crosslinkable hydrocolloid is a low methoxyl pectin with a degree of esterification of less than 2%.

9. The composition of any of claims 1 to 8 wherein the crosslinkable hydrocolloid is a low methoxyl pectin with an average molecular weight of greater than 50,000.

10. The composition of any of claims 1 to 8 wherein the crosslinkable hydrocolloid is a low methoxyl pectin with an average molecular weight of greater than 65,000.

11. The composition of any of claims 1 to 8 wherein the crosslinkable hydrocolloid is a low methoxyl pectin with an average molecular weight of greater than 80,000.

12. The composition of any of claims 1 to 11 wherein the carrageenan is selected from kappa or iota carrageenan.

13. A process for coating or enrobing a foodstuff comprising heating for a sufficient time to dissolve ingredients of a coating or enrobing composition comprised of water, soluble solids, and at least one crosslinkable hydrocolloid selected from the group consisting of pectin, carrageenan, alginate, agar, and gellan, coating a foodstuff with the enrobing composition, and then contacting the coated foodstuff with a sufficient amount of a crosslinking agent to crosslink the crosslinkable hydrocolloid to produce an enrobed foodstuff having organoleptic properties comparable to full fat enrobed foodstuffs.

14. The process of claim 13 wherein the crosslinkable hydrocolloid is pectin, carrageenan, alginate or gellan.

15. The process of claim 13 wherein the crosslinkable hydrocolloid is a low methoxyl conventional (LMC) pectin.

16. The process of claim 15 wherein the LMC pectin is a low methoxyl pectin with a degree of esterificadon of less than 50%.

17. The process of claim 15 wherein the LMC pectin is a low methoxyl pectin with a degree of esterification of less than 25%.

18. The process of claim 15 wherein the LMC pectin is a low methoxyl pectin with a degree of esterification of less than 2%.

19. The process of any of claims 15 to 18 wherein the LMC pectin is a low methoxyl pectin with an average molecular weight of greater than 50,000.

20. The process of any of claims 15 to 18 wherein the LMC pectin is a low methoxyl pectin with an average molecular weight of greater than 65,000.

21. The process of any of claims 15 to 18 wherein the LMC pectin is a low methoxyl pectin with an average molecular weight of greater than 80,000.

22. The process of any of claims 13 to 21 wherein the soluble solids are selected from the group consisting of carbohydrates, cocoa powder, peanut flour, caramel powder, yogurt powder, fiber compositions and mixtures thereof.

23. The process of claim 22 wherein the carbohydrates are selected from the group consisting of high fructose corn syrup, corn syrup, hydrogenated corn syrup, maltodextrin, dextrose, sucrose (sugar), sucrose syrup, and mixtures thereof.

24. The process of any of claims 13 to 23 wherein the soluble solids are cocoa and sugar.

25. The process of any of claims 22 to 24 wherein the fiber compositions are selected from the group consisting of wheat gluten, wheat starch, rice starch, corn starch, corn flour, and mixtures thereof.

26. The process of any of claims 13 to 25 wherein the crosslinking agent is a mono- or polyvalent cation that will induce the crosslinking reaction.

27. The process of claim 26 wherein the crosslinking agent is selected from the group consisting of calcium, iron, magnesium, zinc, aluminum, manganese and mixtures thereof.

28. The process of claim 27 wherein the crosslinking agent is selected from the group consisting of calcium, iron, magnesium and zinc.

29. The process of claim 28 wherein the crosslinking agent is calcium.

30. The process of claim 26 wherein the crosslinking agent is selected from the group consisting of sodium, potassium, ammonium, and mixtures thereof.

31. The process of any of claims 13 and 22 to 30 wherein the hydrocolloid is agar.

32. The process of claim 31 wherein the crosslinking is thermally initiated.

33. The process of any of claims 13 to 32 wherein the foodstuff is selected from the group consisting of snack cakes, cookies, donuts, fruits, and confectioneries.

34. A foodstuff coated or enrobed with a composition according to any of claims 1 to 12.

35. A coated or enrobed foodstuff obtainable by the process according to any of claims 13 to 33.
